# EUROPEAN PATENT APPLICATION

(11) **EP 1 077 312 A1**
(43) Date of publication of application: **21.02.2001**
(21) Application number: 99116080.5
(22) Date of filing: 17.08.1999
(51) Int. Cl.: F01K 3/24

(54) **Method and apparatus for producing steam for driving a steam turbine, using energy produced in at least two different combustion processes working at different temperatures**

(71) Applicant: ANSALDO VOELUND A/S, 2605 Broendby (DK)
(72) Inventor: Bundgard, Jens, 2800 Lyngby (DK)
(74) Representative: Roerboel, Leif

(57) **Abstract**

In a method and an apparatus for producing steam for driving a steam turbine (1, 2) using energy produced in at least two different combustion processes (3, 4) working at different temperatures, the hot flue gasses (3) from a first combustion process, working at a relatively lower temperature, are used for producing steam and said steam is superheated to the required temperature for supply to the steam turbine (1, 2) using energy from a second combustion process (4) working at a relatively higher temperature.

The superheating of said steam from the first process (3) is performed externally of the two combustion processes (3, 4) by heat exchange (5) between the steam from the first combustion process (3) and steam from the second combustion process (4). In this way the two processes are independent with respect to temperature and pressure and differences can be equalized to predetermined data for working the turbine.

## Description

### TECHNICAL FIELD

The present invention relates to a method in accordance with the preamble of claim 1 and an apparatus in accordance with the preamble of claim 8.

### BACKGROUND ART

In systems of this kind it is known to have a first combustion process producing steam at a relatively lower temperature and a second combustion process producing steam at a relatively higher temperature. The different temperatures may be necessitated by different factors in the two or more different combustion processes, such as e.g. using fuels with incompatibility between flue gasses, flue gas temperatures, boiler temperatures, etc. due to differences in fuel composition and behaviour. From DE4300192 it is further known to provide a super heating of the relatively low temperature steam produced in the first combustion process, by leading said steam through a superheating surface positioned to receive energy from the second combustion process, in order to increase the temperature of said steam to a suitable level for delivery to the steam turbine. This document further describes a heat exchanger/steam generator for exchange of energy between the steams generated in the two processes, in order to compensate for varying energy production in the two processes. This system has a disadvantage in, that the two boilers cannot be operated completely independently, as e.g. steam from the first process will flow through the super heater heating surface in the second process, even if no energy is supplied to the steam in this superheater heating surface. This means that it will be necessary to close down the steam turbine for inspection and/or repair of the boiler in the second process.

### DISCLOSURE OF THE INVENTION

Based on this prior art, it is the object of the present invention to provide a method and an apparatus of the above mentioned kind, with which it is possible to keep the steam flows through the heating surfaces in the two processes completely separated until the steam is delivered to the steam turbine. This is achieved by a method and an apparatus in accordance with claim 1 and 8 respectively. With this arrangement the energy exchange between the two flows of steam is provided externally of the boilers. The energy exchange provides the increase in temperature necessary to increase the efficiency of the steam turbine. The two steam generating processes are independent with respect to temperature and pressure, and differences can be equalized to predetermined data for working the turbine. This means that each of the two processes can be stopped for inspection and/or repair of the boilers and heating surfaces without stopping the other process and the steam turbine. Preferred embodiments of the method and apparatus are revealed in the subordinate claims.

### BRIEF DESCRIPTION OF THE DRAWINGS

In the following detailed part of the present description, the invention will be explained in more detail with reference to the exemplary embodiments of an apparatus in accordance with the invention shown in the drawings, in which
Figure 1 schematically shows a first embodiment of an apparatus in accordance with the invention, in which both processes produce high pressure steam but at different temperatures, and
Figure 2 schematically shows a second embodiment of an apparatus in accordance with the invention, in which the first process produces intermediate pressure steam at one temperature and the second process produces high pressure steam at a different temperature.

### DESCRIPTION OF THE PREFERRED EMBODIMENTS

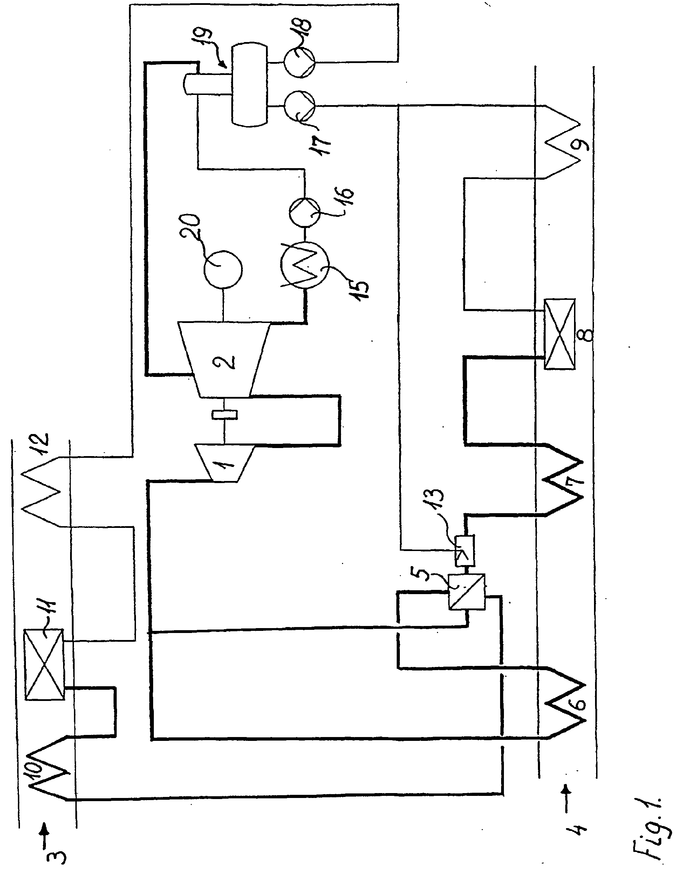

The apparatus shown in Figure 1 is suited to implement the method in accordance with the invention. The apparatus comprises a steam turbine 1, 2 driving an electric generator 20. The steam for driving the steam turbine 1, 2 is generated using the hot flue gasses 3, 4 from two combustion processes (not shown) working at different temperatures.

The hot flue gas 3 from a first combustion process working at a relatively lower temperature is fed to steam generating means 10, 11 and 12, in the example shown comprising a feed water preheater 12 for preheating the feed water, a boiler 11 for generating steam and a superheater 10 for superheating the generated steam. From the steam generating means 10, 11, 12 the generated steam is fed to a heat exchanger 5 for increasing the temperature of the steam generated in the first process to a suitable temperature for delivery to the high pressure inlet to the steam turbine 1, 2.

The hot flue gas 4 from a second combustion process working at a relatively higher temperature is fed to steam generating means 6, 7, 8, 9, in the example shown comprising a feed water preheater 9 for preheating the feed water, a boiler 8 for generating steam and a superheater 7 for superheating the generated steam. From the steam generating means 7, 8, 9 the generated steam is fed to a heat exchanger 5 for delivering the energy for increasing the temperature of the steam generated in the first combustion process, whereafter the steam thus cooled by the heat exchange in the heat exchanger 5 is fed to a supplementary superheater 6 for increasing the temperature of the steam generated in the second combustion process to a suitable temperature for delivery to the high pressure inlet to the steam turbine 1, 2.

The two flows of steam are united immediately before delivery to the high pressure inlet to the steam turbine 1, 2. In the apparatus shown in fig. 1, the steam from the outlet from the high pressure stage 1 of the steam turbine 1, 2 is fed directly to the intermediate pressure stage 2 of the steam turbine 1, 2. In a conventional way the outlet from the turbine is connected to a condenser 15 and the condensed steam is pumped to a feed water tank 19 by a condensate pump 16. The feed water for the two steam generating processes is delivered by separate feed water pumps 17 and 18.

When both processes are delivering hot flue gasses 3 and 4, a substantial increase in the efficiency is achieved due to the higher energy content in the steam delivered to the turbine 1, 2. In the event that the first combustion process is stopped and no hot flue gasses 3 are delivered to the steam generating means 10, 11, 12, the other combustion process continues to deliver hot flue gasses 4 and high temperature steam is produced by the steam generating means 6, 7, 8, 9. In order to compensate for the missing cooling of the steam in the heat exchanger 5, water is sprayed 13 into the steam in an amount which will reduce the temperature of the steam delivered to the steam turbine 1, 2 to the temperature achieved when both processes are running. If the second process is stopped and no hot flue gasses 4 are delivered to the steam generating means 6, 7, 8, 9, the turbine will be constructed to be able to use the lower quality steam (lower overheating and mass flow). Accordingly, the turbine will have to be laid out in accordance with the type and size of the boilers and the fuel used.

Each of the boilers will thus be accessible for inspection and repair without danger for the workers and without forced stop of the steam turbine 1, 2.

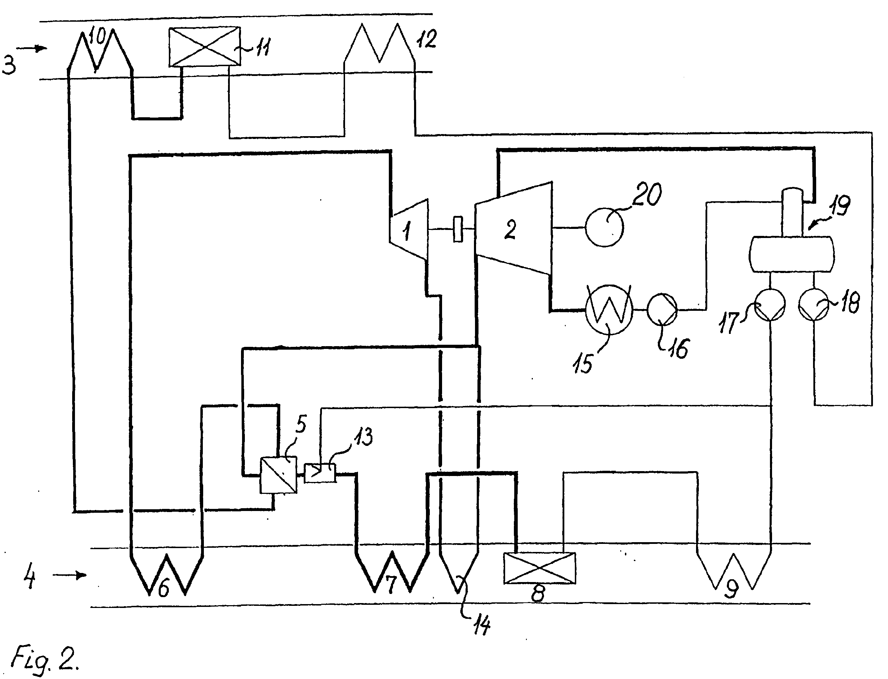

The apparatus shown in Figure 2 is quite similar to the apparatus shown in Figure 1 and corresponding components are referred by the same reference numbers. However, in this apparatus the hot flue gasses 3 from the first combustion process is producing steam at a lower pressure corresponding to the pressure of steam for delivery to the intermediate pressure stage 2 of the steam turbine. Again the temperature of the flue gasses 3 from the first combustion process is relatively lower that the temperature of the flue gasses 4 from the second combustion process. In this apparatus the steam generated by the steam generating means 10, 11, 12 is superheated by heat exchange in the heat exchanger 5 to a temperature suitable for delivery to the intermediate pressure stage 2 of the steam turbine 1, 2. Again the steam from the steam generating means 7, 8, 9 is used to deliver energy to the heat exchanger 5 and is afterwards superheated in a supplementary super heater 6 to obtain a temperature suitable for delivery to the high pressure stage 1 of the steam turbine 1, 2. In this apparatus a further intermediate super heater 14 is positioned in the hot flue gasses 4 from the second combustion process in order to provide an intermediate super heating of the steam between the high pressure stage 1 and the low pressure stage 2 of the steam turbine. A corresponding intermediate super heater could also be used in the apparatus in accordance with Figure 1 between the outlet from the high pressure stage 1 and the inlet to the intermediate pressure stage 2 of the steam turbine 1, 2. The steam generated by the steam generating means 10, 11, 12 and super heated in the heat exchanger 5 is united with the steam generated by the steam generating means 7, 8, 9, cooled in the heat exchanger 5, resuperheated in the supplementary super heater 6, flowing through the high pressure stage 1 of the steam turbine 1, 2, and reheated in the intermediate superheater 14, for common delivery to the intermediate pressure stage 2 of the steam turbine 1, 2.

In the event that the first combustion process is stopped and no hot flue gasses 3 are delivered to the steam generating means 10, 11, 12, the second combustion process may continue to deliver hot flue gasses 4 and the steam generating means 7, 8, 9 may continue to produce high pressure steam which is superheated in the superheater 6 for delivery to the high pressure stage 1 of the steam turbine 1, 2. In order to compensate for the missing cooling of said steam in the heat exchanger 5, water is again sprayed 13 into the flow of steam in order to reduce the temperature to the temperature present when both combustion processes are running. Correspondingly, if the second combustion process is stopped and no hot flue gasses 4 are delivered to the steam generating means 7, 8, 9 and superheaters 6, 14, the turbine will have to be dimensioned to be able to use the lower quality steam (lower overheating and mass flow). Again the turbine will have to be dimensioned in accordance with the types and sizes of the boilers and the fuel.

Although the invention in the foregoing has been described with reference to the specific examples shown in Figure 1 and Figure 2, many variations can be suggested within the scope of the following claims. Such variations comprise the use of more than two different combustion processes working under different conditions and using one or more heat exchangers for increasing the temperature of steam generated at a relatively lower temperature by heat exchange with steam generated at a relatively higher temperature.

## Claims

1. Method for producing steam for driving a steam turbine (1, 2) using energy produced in at least two different combustion processes (3, 4) working at different temperatures, the hot flue gasses (3) from a first combustion process, working at a relatively lower temperature, being used for producing steam and said steam being superheated to the required temperature for supply to the steam turbine (1, 2) using energy from a second combustion process (4) working at a relatively higher temperature, **characterized** by,
said superheating of said steam from the first process (3) being performed externally of the two combustion processes (3, 4) by heat exchange (5) between the steam from the first combustion process (3) and steam from the second combustion process (4).

2. Method in accordance with claim 1, **characterized** by the steam from the second combustion process (4), after heat exchange (5) with the steam from the first combustion process (3), being reheated (6) to the required temperature for supply to the steam turbine (1, 2) using energy from the hot flue gasses (4) from the second combustion process.

3. Method in accordance with claim 1 or 2, **characterized** by further comprising that in the event of low energy and steam production or stop in the first process (3), water is sprayed (13) into the steam produced from the second combustion process (4) in order to compensate for the reduced or missing cooling of said steam in said heat exchange (5).

4. Method in accordance with any of the preceding claims, **characterized** by that the first and second process (3, 4) are producing steam for delivery to the high pressure stage (1) of the steam turbine and that the two flows of steam are united immediately before entry into the high pressure stage of the steam turbine.

5. Method in accordance with any of the claims 1-3, **characterized** by that the first process (3) is producing steam for delivery to the intermediate pressure stage (2) of the steam turbine and the second process (4) is producing steam for delivery to the high pressure stage (1) of the steam turbine, and that the two flows of steam are united immediately before introduction into the intermediate pressure stage (2).

6. Method in accordance with claim 5 **characterized** by the flow of steam produced in the second combustion process (4) being reheated (14) using energy from the second combustion process (4), between exit from the high pressure stage (1) and its uniting with the flow of steam produced in the first combustion process (3).

7. Method in accordance with any of the preceding claims, **characterized** by the first combustion process (3) being a waste combustion process and the second combustion process (4) being a biomass combustion process.

8. Apparatus for producing steam for driving a steam turbine (1, 2), using energy produced in at least two different combustion processes (3, 4) working at different temperatures, said apparatus comprising first steam generating means (10, 11, 12) in the hot flue gasses (3) from a first combustion process working at a relatively lower temperature, second steam generating means (7, 8, 9) in the hot flue gasses (4) from a second combustion process working at a relatively higher temperature, and means for increasing the temperature of the steam generated in the first steam generating means (10, 11, 12), **characterized** by the means for increasing the temperature of the steam generated in the first steam generating means (10, 11, 12) comprises a heat exchanger (5) separate from the first and second steam generating means (7, 8, 9, 10, 11, 12), said heat exchanger being connected to receive steam generated in said first steam generating means (10, 11, 12) and steam generated in said second steam generating means (7, 8, 9) and to deliver the superheated steam to the steam turbine (1, 2).

9. Apparatus in accordance with claim 8, **characterized** by further comprising a reheater (6) in the hot flue gasses (4) from the second combustion process, said reheater being connected to receive the steam used for superheating the steam generated in the first steam generating means (10, 11, 12), and to deliver the reheated steam to the steam turbine.

10. Apparatus in accordance with any of the claims 8-9, **characterized** by further comprising a nozzle (13) for spraying feed water into the steam generated in the second steam generating means (7, 8, 9,), immediately before this steam enters into the heat exchanger (5).

11. Apparatus in accordance with any of the claims 8-10, **characterized** by the superheated steam outlet from the heat exchanger (5) and the other outlet, possibly via the reheater (6), both being connected to the high pressure stage (1) of the steam turbine (1, 2).

12. Apparatus in accordance with any of the claims 8-10, **characterized** by the superheated steam outlet from the heat exchanger (5) being connected to the intermediate pressure stage of the steam turbine.

13. Apparatus in accordance with any of the claims 8 - 12, **characterized** by further comprising an intermediate superheater (14) in the hot flue gasses (4) from the second combustion process, said intermediate superheater (14) being connected to receive the steam used in the high pressure stage (1) of the steam turbine (1, 2) and to deliver the superheated steam to the intermediate pressure stage (2) of the steam turbine (1, 2).
